# EUROPEAN PATENT SPECIFICATION

(11) **EP 0 995 501 B1**
(45) Date of publication and mention of the grant of the patent: **06.09.2006**
(21) Application number: 98907251.7
(22) Date of filing: 16.03.1998
(51) Int. Cl.: B08B 3/02, B60S 3/00

(54) **BEARING CLEANING DEVICE FOR ELECTRIC MOTORS**
GERÄT ZUM REINIGEN DER LAGER VON ELEKTROMOTOREN
DISPOSITIF DE NETTOYAGE DE PALIERS POUR MOTEURS ELECTRIQUES

(43) Date of publication of application: 26.04.2000
(73) Proprietor: Central Japan Railway Company, Nagoya-shi, Aichi 450-0002 (JP)
(72) Inventor: ICHIKAWA, H., Central Japan Railway Co., Nagoya-shi, Aichi 450-0002 (JP); KATAGIRI, M., Central Japan Railway Co., Nagoya-shi, Aichi 450-0002 (JP); YOSHIKAWA, K., Central Japan Railway Co., Nagoya-shi, Aichi 450-0002 (JP); UCHIDA, M., Central Japan Railway Co., Nagoya-shi, Aichi 450-0002 (JP); HORIE, K., Central Japan Railway Co., Nagoya-shi, Aichi 450-0002 (JP)
(74) Representative: Eisele, Otten, Roth & Dobler
(86) International application number: PCT/JP1998/001105
(87) International publication number: WO 1999/047279

(56) References cited:
- JP-A- 7 185 479
- JP-A- 52 025 469
- JP-U- 3 044 559

## Description

### TECHNICAL FIELD

The present invention relates to a bearing cleaning device for an electric motor which can clean a bearing of the electric motor without detaching the bearing from the electric motor, particularly to a bearing cleaning device for an electric motor suitable for cleaning a bearing of a main motor for a railroad car whose bearing needs to be periodically cleaned and filled with grease.

### BACKGROUND ART

The bearing of the main motor for the railroad car is heretofore cleaned periodically. In many cases, since the bearing of the main motor is in a position in which only by removing a cover outside the main motor, an outer end face of the bearing is exposed to the outside, the bearing can be cleaned by spraying cleaning liquid from an injection nozzle onto the bearing without removing the bearing from the main motor.

However, since various electric components are built in the main motor, it is important to prevent the cleaning liquid from entering the main motor when cleaning is performed without removing the bearing from the main motor. Usually, the position adjoining an inner end face of the bearing is provided with a seal portion for preventing foreign particles from entering the electric motor via the bearing. Therefore, if the cleaning liquid does not pass through the seal portion, the cleaning liquid can be prevented from entering the main motor.

To prevent the cleaning liquid from passing through the seal portion, in a conventional method, for example, the injection nozzle is inclined relative to the bearing and the cleaning liquid is spouted at a low injection pressure.

However, in the method, there is a problem that the cleaning requires a long time and a sufficient cleaning cannot be performed.

To solve the problem, a technique is disclosed in Japanese Patent Application Laid-open No. Hei 7-185479 that by feeding pressurized air into an electric motor, an air current directed from the electric motor via a clearance in a seal portion toward a bearing is generated, and cleaning liquid is prevented from passing through the seal portion by the force of the air current.

However, all the pressurized air fed into the main motor does not form the air current directed via the clearance in the seal portion toward the bearing, and part of the air is dispersed as an air current directed toward the inside of the main motor. Therefore, if the pressurized air is not fed with an excessively high pressure to compensate for even the dispersed air, the air current directed via the clearance in the seal portion toward the bearing is not sufficiently generated. Therefore, a problem that a desired effect cannot be obtained occurs.

Moreover, even if a pressurizing mechanism having a high pressurizing capability is used to feed the pressurized air with an excessively high pressure, a path usable for feeding the pressurized air is not so wide, and such a narrow path obstructs the sufficient rising of the pressure inside the electric motor. Therefore, there is a problem that an expectedly strong air current is not generated in the clearance in the seal portion or a problem that the pressurizing capability of the pressurizing mechanism cannot be sufficiently used.

The present invention has been developed to solve the problems, and an object thereof is to provide a bearing cleaning device for an electric motor which can clean a bearing without removing the bearing from the electric motor and particularly can prevent cleaning liquid including soil and grease from entering the electric motor at the time of cleaning.

### DISCLOSURE OF THE INVENTION

The present invention provides a bearing cleaning device for an electric motor which can clean the bearing without removing the bearing from said electric motor, the bearing being disposed in a position in which an outer end face can be exposed outside the electric motor and an inner end face is adjacent to a seal portion for inhibiting foreign particles from entering said electric motor and rotatably supporting a rotation shaft of said electric motor in the position, comprising: an injection nozzle which can inject cleaning liquid toward said bearing; and a pressure reducing mechanism for reducing a pressure on the side of said bearing to generate an air current which is directed from the inside of said electric motor via a clearance in said seal portion toward said bearing.

In the bearing cleaning device having the constitution, since the pressure reducing mechanism reduces the pressure on the side of the bearing to generate the air current directed from the inside of the electric motor via the clearance in the seal portion toward the bearing, the air current directed in a desired direction is generated in the clearance in the seal portion without feeding a pressurized air to the inside of the electric motor. All the air current generated inside the electric motor accompanying the pressure reduction is finally converged as an air current directed via the clearance in the seal portion toward the bearing. Therefore, different from when the pressurized air is fed, no air current dispersed in an unnecessary direction is generated.

Furthermore, since the bearing portion whose pressure is reduced is outside the electric motor and the pressure does not need to be reduced via a narrow path, by using the pressure reducing mechanism having a high pressure reducing capability, an accordingly strong air current is generated in the clearance in the seal portion. Moreover, the capability of the pressure reducing mechanism can be fully utilized.

In the bearing cleaning device according to the invention, said pressure reducing mechanism comprises: a hollow body whose peripheral edge of an opening closely contacts to said electric motor to form an enclosed chamber; and a suction pump for drawing air in said chamber, and said injection nozzle is disposed in said chamber and constituted in such a manner that the cleaning liquid can be injected via the opening in said hollow body toward said bearing being exposed to said chamber.

In the bearing cleaning device having the constitution, by drawing the air in the chamber with the suction pump, the pressure in the chamber can be reduced. Furthermore, the inside of the chamber is cleaned. Therefore, the cleaning liquid can be prevented from being scattered to the outside of the chamber.

To allow the peripheral edge of the opening in the hollow body to closely contact to the electric motor, a packing may be provided which is deformed along the peripheral edge of the opening to closely contact to the electric motor. Furthermore, the peripheral edge of the opening may be allowed to closely contact to an outer covering of the electric motor, an outer ring of the bearing or another portion of the bearing which is not to be cleaned if any.

When the bearing cleaning device of the invention is provided with said chamber and the pressure reducing pump, the device is further provided with a drain pipe for discharging waste liquid after the cleaning from said chamber and a drain tank in which the waste liquid discharged via the drain pipe is accumulated. Said suction pump is connected in such a manner that the suction pump can draw air in said drain tank, and an inlet port from said drain pipe in the drain tank and a suction port toward said suction pump in the drain tank may be provided in a position higher than a maximum water level the waste liquid accumulated in the drain tank can reach.

According to the bearing cleaning device having the constitution, when the suction pump is operated, air flows via the drain pipe to the drain tank. Therefore, the pressure in the chamber is reduced. Furthermore, the waste liquid is urge to flow into the drain pipe. The collecting efficiency of the waste liquid from the chamber is enhanced.

### BRIEF DESCRIPTION OF THE DRAWINGS

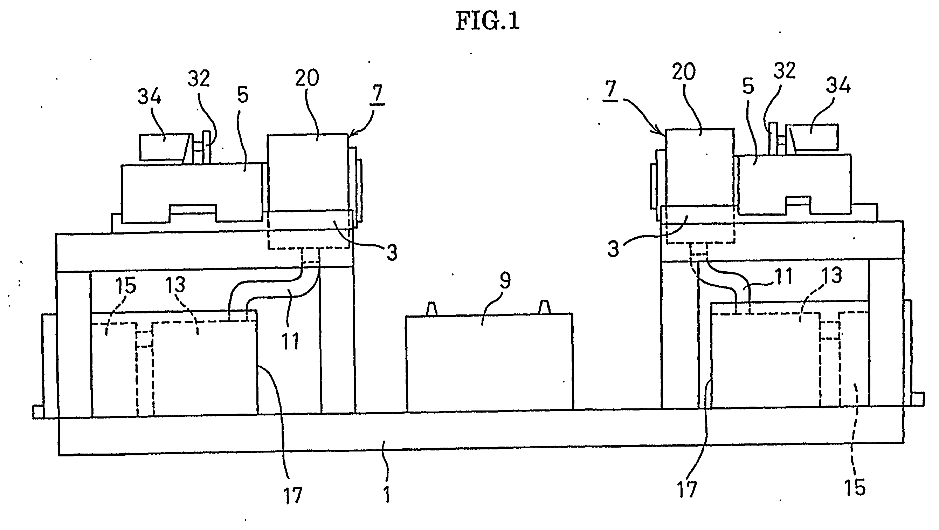

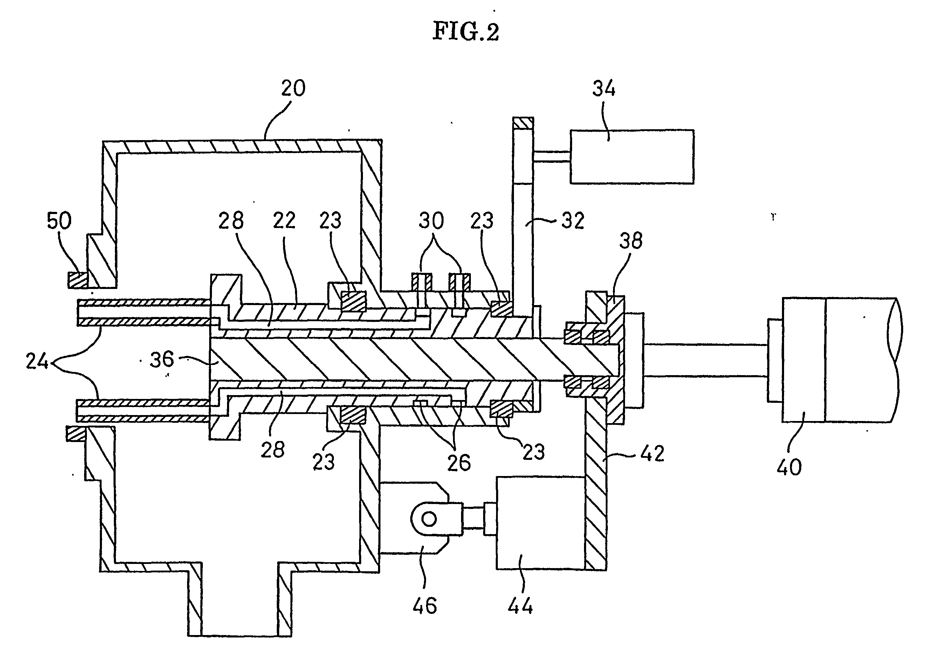

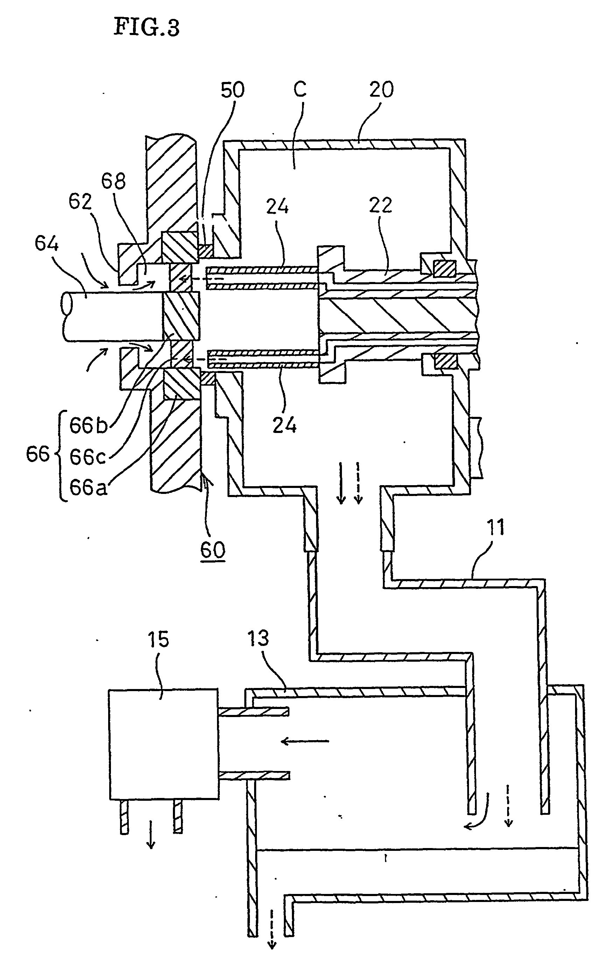

Fig. 1 is a front view showing an entire structure of a preferred bearing cleaning device according to the invention. Fig. 2 is a sectional view mainly showing a cleaning mechanism in the bearing cleaning device. Fig. 3 is a sectional view mainly showing a pressure reducing mechanism of the bearing cleaning device for the electric motor.

### BEST MODE OF PRACTICING THE INVENTION

To further detail the present invention, an example of a bearing cleaning device for an electric motor according to the invention will be described with reference to the accompanying drawings. Additionally, to facilitate the understanding, a detail structure is omitted from the accompanying drawings.

Fig. 1 is a front view showing an entire structure of a preferred bearing cleaning device according to the invention.

The bearing cleaning device is provided with a base frame 1, movable frames 5 which can advance/retreat along rails 3 fixed on the base frame 1, cleaning mechanisms 7 constituted on the movable frame 5, a rest 9 with a main motor installed on a top face thereof, drain tanks 13 into which waste liquid discharged from the cleaning mechanisms 7 at the time of cleaning a bearing flows via drain pipes 11, and suction pumps 15 connected to the drain tanks 13. The drain tanks 13 and the suction pumps 15 are contained in boxes 17.

Fig. 2 is a sectional view mainly showing the cleaning mechanism 7.

The cleaning mechanism 7 is provided with a hood 20 as a hollow body fixed to the movable frame 5. Inside the hood 20, a rotation member 22 is rotatably supported by a bearing 23. Two injection nozzles 24 are attached to a tip end of the rotation member 22, and two annular grooves 26 are formed around an outer peripheral face of the rotation member 22. A cleaning liquid flow path 28 extended from one annular groove 26 to one injection nozzle 24 is formed inside the rotation member 22. Cleaning liquid is supplied from cleaning liquid injection ports 30 formed in the side of the hood 20 to the annular grooves 26. The cleaning liquid reaches the injection nozzles 24 via the cleaning liquid flow paths 28 and is spouted from the injection nozzles 24.

Moreover, the rotation member 22 is interconnected via a belt 32 to a motor 34, and rotated and operated by a power transmitted from the motor 34. One end of a center shaft 36 fixed to the center of the rotation member 22 is provided with a bearing 38. By operating a hydraulic cylinder 40 interconnected to the bearing 38, the entire cleaning mechanism 7 moves together with the movable frame 5. Additionally, the bearing 38 is interconnected via a support plate 42, a damper 44 and a connector 46 to the hood 20.

Fig. 3 is a sectional view mainly showing a pressure reducing mechanism of the bearing cleaning device.

One end of the drain pipe 11 is connected to the lower portion of the hood 20, and the other end of the drain pipe 11 is connected to the drain tank 13 above the maximum allowable water level of the drain tank 13 (the maximum water level the waste liquid stored in the drain tank can reach). Moreover, the suction pump 15 is similarly connected above the maximum allowable water level of the drain tank 13.

Additionally, a peripheral edge of an opening in the hood 20 is provided with a packing 50 projected outside. When the cleaning mechanism 7 moves together with the movable frame 5 toward an electric motor 60, the packing 50 closely contacts to the electric motor 60.

The electric motor 60 is provided with a bearing 66 disposed in a position in which an outer end face of the bearing is exposed to the outside of the electric motor 60 and an inner end face of the bearing is adjacent to a seal portion 62 for inhibiting foreign particles from entering the electric motor 60. In the position, a rotation shaft 64 of the electric motor 60 is rotatably supported by the bearing 66. The bearing 66 is constituted of an outer ring 66a fixed to the electric motor 60, an inner ring 66b disposed inside the outer ring 66a and plural rolling elements 66c interposed between the outer ring 66a and the inner ring 66b. There are clearances among the adjoining rolling elements 66c, and the clearances and a grease pocket 68 between the rolling elements 66c and the seal portion 62 are filled with the necessary amount of grease in the operation condition.

A method of operating the bearing cleaning device will be described.

The electric motor 60 as a cleaning object is mounted on the top face of the rest 9 after a cover covering the bearing 66 is removed. In the condition, when the hydraulic cylinder 40 is operated to move the cleaning mechanism 7 together with the movable frame 5, the packing 50 provided in the hood 20 closely contacts to the outer ring 66a of the bearing 66, thereby forming an enclosed chamber C.

In the condition, when the suction pump 15 is operated, the pressure in the chamber C is reduced, and an air current directed from the inside of the electric motor 60 via the clearance in the seal portion 62 toward the bearing 66 (flows shown by solid-line arrows in Fig. 3) is generated. The degree to which the pressure is to be reduced varies with the injection pressure of the cleaning liquid and the structure of the seal portion 62, therefore, cannot be specified unconditionally, but is set herein in such a manner a negative pressure of -20cmHg is generated in the suction pump 15.

Moreover, by operating the motor 34, the rotation member 22 is rotated. In this condition, when a heated and pressurized cleaning liquid is supplied from a pump (not shown) to the cleaning liquid injection ports 30, the cleaning liquid is spouted from the revolving injection nozzles 24 to the bearing 66. In the example, as the cleaning liquid, a high temperature and pressure cleaning water of 90°C and 500kg/cm² is used, and injected by about 200 liters for seven to eight minutes to perform cleaning. It is natural that other cleaning liquid, e.g., kerosene, replacements for fron and the like can be used and temperature, pressure, injection amount, injection time and other conditions can be appropriately changed. Furthermore, the cleaning liquid is injected from the injection nozzles 24 at a slight inclination angle (only about six degrees) relative to the axial line as the rotation center of the bearing 66 to weaken a force exerted into the seal portion 62, which is not shown because the structure is schematically shown in the figure.

When the cleaning is performed in this manner, dirt and grease accumulated in the clearance among the rolling elements 66c and the grease pocket 68 are washed away with the cleaning liquid. The waste liquid flows via the drain pipe 11 to the drain tank 13, but an air current is generated accompanying the suction by means of the suction pump 15. Therefore, the waste liquid is urged to flow out via the drain pipe 11. Furthermore, the injection of the cleaning liquid is accompanied by the scattering of the cleaning liquid collided on the bearing 66, but splashes are not prevented from jumping out of the chamber C. The splashes ride on the air current flown into the drain pipe 11 and are collected into the drain tank 13 without being accumulated in the chamber C. Furthermore, the cleaning liquid passes through the clearance among the rolling elements 66c and reaches the seal portion 62. However, since the air current is spouted from the seal portion 62, the cleaning liquid is prevented from entering the electric motor 60 via the seal portion 62.

Especially, the air current generated inside the electric motor 60 accompanying the pressure reduction is finally converged as an air current directed via the clearance of the seal portion 62 toward the bearing 66. Therefore, different from when the pressurized air is fed, an air current dispersed in an unnecessary direction is not generated. A relatively strong air current can be generated in the clearance of the seal portion 62. Furthermore, different from when the pressurized air is fed, the pressure does not need to be reduced via a narrow path. Therefore, the negative pressure is produced around the outer end face of the bearing 66 in accordance with the capability of the suction pump 15, and contributes to the generation of the relatively strong air current in the clearance of the seal portion 62. The capability of the suction pump 15 can be utilized to the maximum.

In the above, the example of the bearing cleaning device for the electric motor according to the invention has been described, but the invention is not restricted to the aforementioned concrete mode.

### INDUSTRIAL APPLICABILITY

As aforementioned, in the bearing cleaning device for the electric motor according to the invention, the bearing of the electric motor can be cleaned without disassembling the electric motor. Therefore, the device is useful when a relatively large electric motor which is difficult to be disassembled is cleaned. Especially, in the main motor for the railroad car whose bearing is periodically cleaned, maintenance can be performed without performing the disassembling. Therefore, the device is remarkably convenient.

## Claims

1. A bearing cleaning device (7) for an electric motor (60) which can clean the bearing (66) without removing the bearing from said electric motor, the bearing being disposed in a position in which an outer end face can be exposed outside the electric motor and an inner end face is adjacent to a seal portion (62) for inhibiting foreign particles from entering said electric motor and rotatably supporting a rotation shaft of said electric motor in the position, comprising:
an injection nozzle (24) which can inject cleaning liquid toward said bearing; and
a pressure reducing mechanism (15, 20) for reducing a pressure on the side of said bearing to generate an air current which is directed from the inside of said electric motor via a clearance in said seal portion toward said bearing.

2. The bearing cleaning device for the electric motor according to claim 1 wherein
said pressure reducing mechanism comprises:
a hollow body (20) whose peripheral edge of an opening closely contacts to said electric motor to form an enclosed chamber; and
a suction pump (15) for drawing air in said chamber, and said injection nozzle is disposed in said chamber and constituted in such a manner that the cleaning liquid can be injected via the opening of said hollow body toward said bearing being exposed to said chamber.

3. The bearing cleaning device for the electric motor according to claim 2 which is provided with:
a drain pipe (11) for discharging waste liquid after the cleaning from said chamber; and
a drain tank (13) in which the waste liquid discharged via the drain pipe is accumulated, wherein
said suction pump is connected in such a manner that the suction pump can draw air in said drain tank, and
an inlet port from said drain pipe in the drain tank and a suction port toward said suction pump in the drain tank are provided in a position higher than a maximum water level the waste liquid accumulated in the drain tank can reach.

## Patentansprüche

1. Gerät (7) zum Reinigen von Lagern für einen Elektromotor (60), welches das Lager (66) zu reinigen vermag, ohne das Lager aus dem Elektromotor entfernen zu müssen, wobei das Lager in einer Position angebracht ist, in der eine äußere Endfläche außerhalb des Elektromotors exponiert werden kann und eine innere Endfläche angrenzend an einen Dichtungsabschnitt (62) angeordnet ist, um Fremdteilchen am Eindringen in den Elektromotor zu hindern, und wobei das Lager rotierender Weise eine Rotationswelle des Elektromotors in dieser Position trägt, Folgendes umfassend:
eine Einspritzdüse (24), die Reinigungsflüssigkeit zum Lager spritzen kann; und
einen Druckreduzierungsmechanismus (15, 20) zur Reduzierung eines Drucks auf der Seite des Lagers, um einen Luftstrom zu generieren, der von der Innenseite des Elektromotors über eine Aussparung im Dichtungsabschnitt auf das Lager gerichtet ist.

2. Gerät zum Reinigen von Lagern für einen Elektromotor gemäß Anspruch 1, wobei der Druckreduzierungsmechanismus Folgendes umfasst:
einen Hohlkörper (20), dessen Außenkante einer Öffnung eng an den Elektromotor anschließt, um eine geschlossene Kammer zu bilden; und eine Saugpumpe (15) zum Einziehen von Luft in die Kammer, wobei die Einspritzdüse in der Kammer untergebracht ist und so beschaffen ist, dass die Reinigungsflüssigkeit über die Öffnung des Hohlkörpers gegen das Lager eingespritzt werden kann, welches an der Kammer exponiert ist.

3. Gerät zum Reinigen von Lagern für einen Elektromotor gemäß Anspruch 2, versehen mit:
einem Abflussrohr (11) zum Abführen von Abfallflüssigkeit nach dem Reinigen aus der Kammer; und
einem Sammelbehälter (13), in dem die über das Abflussrohr abgeführte Abfallflüssigkeit gesammelt wird, wobei
die Saugpumpe auf eine Weise angeschlossen ist, dass die Saugpumpe Luft in den Sammelbehälter ziehen kann, und
eine Einlassöffnung von dem Abflussrohr im Sammelbehälter und eine Ansaugöffnung zur Saugpumpe im Sammelbehälter in einer Position vorgesehen sind, die höher liegt als ein Höchstpegelstand, den die im Sammelbehälter gesammelte Abfallflüssigkeit erreichen kann.

## Revendications

1. Dispositif de nettoyage de palier (7) pour un moteur électrique (60), qui peut nettoyer le palier (66) sans retirer le palier dudit moteur électrique, le palier étant disposé dans une position dans laquelle une face d'extrémité externe peut être exposée à l'extérieur du moteur électrique et une face d'extrémité interne est adjacente à une partie d'étanchéité (62) pour empêcher l'entrée de particules étrangères dans ledit moteur électrique et pour supporter de façon rotative un arbre de rotation dudit moteur électrique dans la position, comprenant :
une buse d'injection (24) qui peut injecter du liquide de nettoyage vers ledit palier ; et
un mécanisme de réduction de pression (15, 20) pour réduire la pression sur le côté dudit palier pour engendrer un courant d'air qui est dirigé de l'intérieur dudit moteur électrique via un jeu dans ladite partie d'étanchéité vers ledit palier.

2. Dispositif de nettoyage de palier pour le moteur électrique selon la revendication 1 dans lequel ledit mécanisme de réduction de pression comprend :
un corps creux (20) dont le bord périphérique d'une ouverture fait contact étroitement avec ledit moteur électrique pour former une chambre close ; et
une pompe d'aspiration (15) pour aspirer de l'air dans ladite chambre, et ladite buse d'injection est disposée dans ladite chambre et est constituée de telle manière que le liquide de nettoyage puisse être injecté via l'ouverture dudit corps creux vers ledit palier qui est exposé à ladite chambre.

3. Dispositif de nettoyage de palier pour le moteur électrique selon la revendication 2 qui est équipé :
d'un tuyau de vidange (11) pour évacuer le liquide usé après le nettoyage de ladite chambre ; et
un réservoir de vidange (13) dans lequel le liquide usé évacué via le tuyau de vidange s'accumule, dans lequel
ladite pompe d'aspiration est raccordée de telle manière que la pompe d'aspiration puisse aspirer de l'air dans ledit réservoir de vidange, et
un orifice d'entrée dudit tuyau de vidange dans le réservoir de vidange et un orifice d'aspiration vers ladite pompe d'aspiration dans le réservoir de vidange sont prévus dans une position plus haute qu'un niveau d'eau maximum que le liquide usé accumulé dans le réservoir de vidange peut atteindre.
